# EUROPÄISCHE PATENTANMELDUNG

(11) **EP 2 228 031 A1**
(43) Veröffentlichungstag der Anmeldung: **15.09.2010**
(21) Anmeldenummer: 10155177.8
(22) Anmeldetag: 02.03.2010
(51) Int. Cl.: A61C 7/28, A61C 7/14

(54) **Selbstligierendes Bracket für die Orthodontie**

(30) Priorität: 10.03.2009 CH 3522009; 13.10.2009 CH 15762009
(71) Anmelder: Tröster, Dominik A., 4312 Magden (CH)
(72) Erfinder: Tröster, Dominik A., 4312 Magden (CH)
(74) Vertreter: Schneider Feldmann AG Patent- und Markenanwälte

(57) **Zusammenfassung**

Die Erfindung betrifft ein nicht-ligierendes Bracket für die Orthodontie umfassend einen Sockel (2) mit einer Fläche (3) zum Anbringen an einen Zahn, einer ersten Rille (4) zum Einlegen eines ersten Drahtes (5) und zwei quer zur Rille (4) verlaufende Führungen (9), sowie einen als Platte ausgestalteten ersten Schieber (6), welcher in den Führungen (9) linear verschiebbar geführt ist zum Verschliessen und zum Öffnen der ersten Rille (4). Erfindungsgemäss ist der Schieber (6) in den Führungen (9) geklemmt und unentnehmbar angebracht und steht in der geschlossenen Stellung frontal am Sockel (2) an.

## Beschreibung

### Technisches Gebiet

Die Erfindung betrifft ein nicht-ligierendes Bracket für die Orthodontie umfassend einen Sockel mit einer Fläche zum Anbringen an einen Zahn, einer ersten Rille zum Einlegen eines ersten Drahtes und zwei quer zur Rille verlaufende Führungen, sowie einen als Platte ausgestalteten ersten Schieber, welcher in den Führungen linear verschiebbar geführt ist zum Verschliessen und zum Öffnen der ersten Rille.

### Stand der Technik

Brackets für die Orthodontie sind auf die Zähne aufgeklebte festsitzende Apparaturen. Sie werden mit einem oder mehreren metallischen oder nicht metallischen Drähten oder Drahtbögen, die in dafür vorgesehene Rillen eingelegt werden, miteinander verbunden und dienen der Korrektur der Zahnstellung. Brackets sind in der Regel metallisch oder transparent/zahnfarbig. Metallische Brackets sind robuster, transparente Brackets sind unauffälliger, da sie farblich den Zähnen angeglichen werden können. Sie bestehen in der Regel aus Keramik oder künstlichen Saphiren. Bei innen liegenden, sogenannten lingualen (zungenseitigen) Brackets spielt die Farbe keine Rolle, da diese eigentlich nicht gesehen werden. Im Gegensatz zu den mehr bekannten, labial (lippenseitig) an den Zähnen angebrachten Brackets sind an linguale Brackets aber andere, hohe Anforderungen gestellt.

Erstens ist der Platz zwischen der Aussenseite der Zähne im Unterkiefer und der Innenseite der Zähne im Oberkiefer oft sehr gering. Lingual angebrachte Brackets reduzieren das Platzangebot im Mund, das auch von der Zunge zum Sprechen gebraucht wird. Bei unzureichenden Platzverhältnissen für die Zunge können die Zischlaute nicht mehr in der gewohnten Weise artikuliert werden, und es kommt unter Umständen zu einem Lispeln. Daher sollten linguale Brackets möglichst dünn ausgestaltet sein.

Zweitens ist für den Zahnarzt der linguale Bereich schlechter zugänglich als der labiale Bereich. Der die Brackets verbindende Drahtbogen muss an jedem Element einzeln befestigt werden. Teilweise muss eine Torsionskraft auf den Zahn wirken, um die gewünschte Zahnstellung zu erreichen. Dazu sind weitere Verspannungen des Drahtes mit den Brackets nötig.

Um die Arbeit zu erleichtert, sind im Lingualbereich wie auch im Labialbereich "selbst-ligierende" oder, präziser, nicht-ligierende Brackets entwickelt worden.

Solche "nicht zu bindende" Brackets ermöglichen einen festen Halt eines Drahtbogens ohne zusätzliches Anbringen von weiteren Spannelementen wie beispielsweise Drähte oder Gummielastiks. Diese werden um die Brackets gewickelt beziehungsweise darübergestülpt, um den Drahtbogen dadurch in der gewünschten Stellung zu halten und um auf den Zahn eine gewisse Kraft auszuüben. Nicht-ligierende Brackets verfügen demnach über eine Vorrichtung zum Befestigen des Drahtes, ohne Verwendung von weiteren Hilfsmitteln wie Drähten oder Gummielastiks.

Zu beachten ist zudem, dass der Zahnarzt mit Spiegeln arbeiten muss, um auf der Innenseite der Zähne seine Arbeiten durchzuführen, was das Befestigen und Lösen der Drähte nochmals anspruchsvoller gestaltet.

Eine bekannte Ausführung eines nicht-ligierenden Brackets ist in der US 2002/0132206 A1 beschrieben. Ein schwenkbarer Bügel klemmt in der geschlossenen Stellung einen in einer Rille eingelegten Drahtbogen ein. Nachteilig an dieser Anordnung ist, dass das Bracket durch den schwenkbaren Bügel sehr hoch gebaut ist. Zudem ist das Öffnen des Bügels schwierig. Mit einem Werkzeug kann im Bügel eingegriffen werden. Da die Öffnung aber eine Rotation ist, kann das Werkzeug leicht abrutschen, was einen Ruck verursacht und für den Patienten sehr unangenehm ist.

In der WO 00/76419 und in der US 485299 B1 sind zwei weitere nicht-ligierende Brackets angegeben, welche mittels schwenkbaren Bügelschlaufen eine Befestigung des Drahtes ermöglichen. Zum Öffnen und Schliessen wird mit einem Werkzeug am Bügel angegriffen. Auch diese Lösungen sind sehr hoch ausgestaltet, bedingt durch die Klappvarrichtung.

Die WO 2005/096984 verwendet einen schiebbaren Schnappbügel zum Einklemmen des Drahtes. Auch hier ist das Öffnen schwierig, da ein in eine dafür vorgesehene Öffnung eingreifendes Werkzeug eine Kante des Brackets passieren muss, was ebenfalls ein Herausspringen des Werkzeugs und einen Ruck mit sich ziehen kann. Auch hier ist die hohe Ausgestaltung unvorteilhaft.

Die US 6247923 zeigt eine Anordnung mit einem schwenkbaren Schieber, der auf einer gewölbten Oberfläche angebracht ist. In Anbetracht der doch sehr niedrigen Bauhöhe, die für Bracket für die linguale Orthodontie akzeptiert werden, bereitet die vorgeschlagene Anordnung Probleme bei der Herstellung solcher Brackets. Zudem kann der Schieber leicht herausfallen.

In der EP 623320 ist eine eingangs erwähnte Ausführung angegeben mit einem Schieber, der durch eine lineare Bewegung zwischen dem offenen und dem geschlossenen Zustand verschoben werden kann. Eine im Sockel eingelagerte Feder hält den Schieber im offenen und geschlossenen Zustand jeweils in der gewünschten Stellung. Diese Feder bedingt einerseits eine grosse Bauhöhe. Andererseits kann sie leicht festsitzen, wenn Speisereste und/oder klebrige Flüssigkeiten zu ihr vordringen.

### Darstellung der Erfindung

Aufgabe der vorliegenden Erfindung ist es, ein eingangs erwähntes nicht-ligierendes Bracket für die Orthodontie zu beschreiben, das mit geringer Bauhöhe ausgestaltet ist und das ein komfortables Befestigen und Lösen mindestens eines Drahtes durch den Zahnarzt ermöglicht, ohne dass befürchtet werden muss, dass die Verriegelung beim Essen oder beim Zähneputzen versehentlich geöffnet wird oder gar verloren geht. Insbesondere soll eine Variante zum Befestigen von zwei Drähten beschrieben werden.

Die Aufgabe wird gelöst durch die Merkmale des ersten Patentanspruchs. Die der Erfindung zugrunde liegende Idee besteht darin, dass der Schieber in den Führungen geklemmt und unentnehmbar angebracht ist und in der geschlossenen Stellung am Sockel frontal ansteht.

Die erfindungsgemässe Ausgestaltung mit einem plan ausgestalteten, planar verschiebbaren Schieber als Verschluss ist baulich viel einfacher als eine Ausgestaltung mit einem Bügel, der um eine Achse herum geklappt werden kann. Zudem lässt sich diese Ausführung mit zwei Schiebern zum Befestigen von zwei Drähten ausgestalten, was bei anderen nicht-ligierenden Brackets nicht der Fall ist.

Entscheidend an dieser Anordnung ist aber, dass der Mechanismus trotz Verschmutzung und/oder Zahnsteinbildung stets einfach bedient werden kann. Dies ist gewährleistet durch die gute Zugänglichkeit des Schiebers und die unentnehmbare Anbringung des Schiebers, der dadurch sozusagen eingesperrt ist.

### Kurze Beschreibung der Zeichnungen

Im Folgenden wird die Erfindung unter Beizug der Zeichnungen näher erklärt. Die Referenzzeichen sind in allen Figuren beibehalten. Es zeigen:
- Fig. 1: eine perspektivische Ansicht eines erfindungsgemässen Brackets in einfacher Ausführung;
- Fig. 2: einen Querschnitt eines erfindungsgemässen Brackets im Bereich einer Aussparung eines Schiebers, (a) mit und (b) ohne Werkzeug, von verschiedenen Seiten her betrachtet;
- Fig. 3: eine perspektivische Ansicht eines erfindungsgemässen Brackets in erweiteter Ausführung.

### Wege zur Ausführung der Erfindung

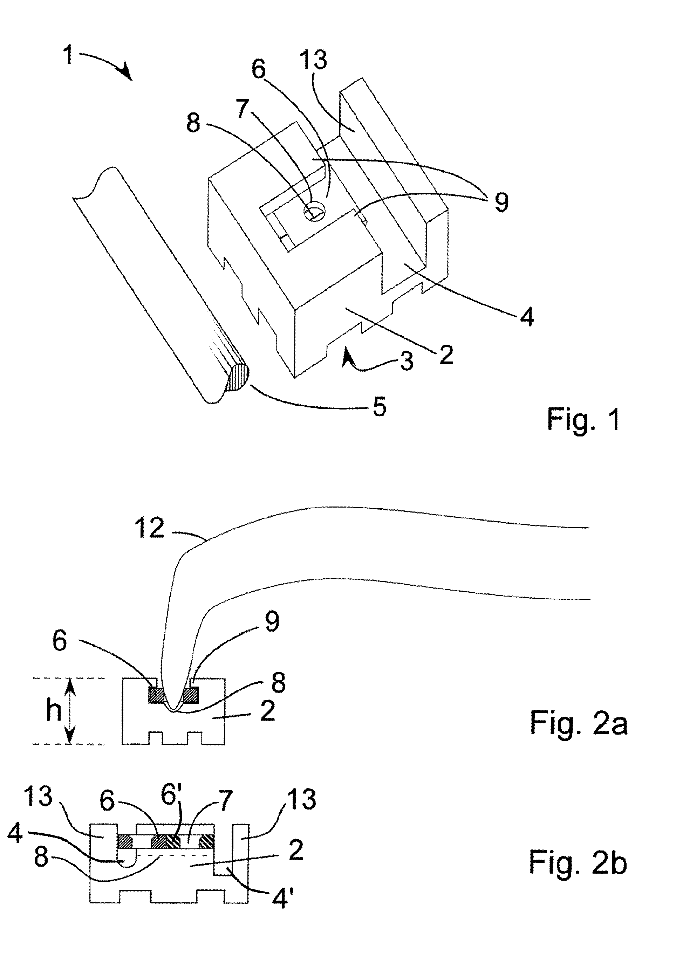

Fig. 1 zeigt eine Variante eines erfindungsgemässen nicht-ligierenden Bracket 1 für die Orthodontie. Es umfasst einen Sockel 2 mit einer Fläche 3 zum Anbringen an einen Zahn. Zudem umfasst es eine erste Rille 4 zum Einlegen eines Drahtes 5. Diese kann, wie in Fig. 1 dargestellt, rechteckig ausgestaltet sein, oder rund. Eine rechteckige Ausgestaltung ist vor allem für einen rechteckigen Draht geeignet. Dieser kann im Gegensatz zu runden Drähten in eine Torsionsspannung versetzt werden. Ausserdem umfasst das Bracket 1 zwei quer zur Rille 4 verlaufende Führungen 9, sowie einen als Platte ausgestalteten ersten Schieber 6, welcher in diesen Führungen 9 linear verschiebbar geführt ist. Durch Verschieben dieser flach ausgestalteten Platte kann die erste Rille 4 verschlossen und wieder geöffnet werden. Erfindungsgemäss ist der Schieber 6 in den Führungen 9 geklemmt und unentnehmbar angebracht. Dadurch ist sichergestellt, dass der Schieber 6 während der Einsatz in einem Bracket 1, also während der gesamten Tragdauer eines Patienten, nicht verloren werden kann. Dies gilt insbesondere auch beim Zähneputzen und beim Kauen von harten Speisen wie Nüssen oder Brotrinde. Vorteilhaft ist zudem auch die leicht zurückversetzte Lage des Schiebers 6. Das Herausfallen wird insbesondere auch dadurch verhindert, dass der Schieber 6 im geschlossenen Zustand am Bracket frontal ansteht. Das Bracket 1 bildet seitlich der Rille 4 gegenüber von den Führungen eine erhöhte Wand 13, welche als Anschlag für den Schieber 6 dient. Durch diese einfache Ausgestaltung des Brackets 1 ist der Schieber 6 gegen das Herausfallen gesichert.

In der offenen Stellung steht der Schieber 6 ebenfalls an, vorzugsweise auch am Sockel 2, gegenüber der Wand 13. Alternativ dazu kann der Schieber 6 auch beispielsweise an einem weiteren Schieber 6 in denselben Führungen 9 oder an weiteren Komponenten anstehen.

Die Klemmung des Schiebers 6 ist beispielsweise dadurch erreicht, dass der Schieber 6 eine hohe Oberflächenrauhigkeit von etwa 21 Charmilles aufweist. So entsteht eine hohe Haftreibung an den Führungen 9, wodurch sich der Schieber 6 nicht ungewollt in den Führungen 9 verschiebt. Eine von aussen auf den Schieber 6 aufgebrachte Kraft kann die Reibung zwischen dem Schieber 6 und den Führungen 9 überwinden und den Schieber 6 in die gewünschte Position bringen. Um die Haftung beim Festsitzen zu vergrössern, können die Oberflächen des Schiebers 6 und/oder die innere Kante der Führungen 9 rau ausgestaltet sein. Idealerweise wird die Oberflächenrauhigkeit so eingestellt, dass für die Verschiebung des Schiebers 6 0.5 - 1N Kraft aufgewandt werden muss.

Vorzugsweise verfügt der Schieber 6 über eine Aussparung 7, wie sie mittig im Schieber 6 in der Fig. 1 eingezeichnet ist. In Fig. 2 ist ein erfindungsgemässes Bracket 1 dargestellt, bei dem ein Werkzeug 12 eines Zahnarztes in die Aussparung 7 eingreift und die Reibung des Schiebers 6 am Bracket 1 überwindet, um den Schieber entlang seinen Führungen 9 zu verschieben, zum Öffnen und zum Schliessen der Rille 4. Sobald das Werkzeug 12 keine Kraft mehr auf den Schieber 6 ausübt, sorgt die Haftreibung zwischen dem Schieber 6 und den Führungen 9 wieder für ein Einhalten der gewählten Position des Schiebers 6.

Vorzugsweise verfügt der Sockel 2 entlang der Verschiebung des Schiebers 6 im Bereich seiner Aussparung 7 über eine Sicke 8. Dank dieser Sicke 8 kann das Werkzeug 12 des Zahnarztes durch den Schieber 6 hindurch in die Sicke 8 gelangen. Somit ist stets ein guter Halt und eine gute Führung zwischen Werkzeug 12 und Schieber 6 gewährleistet, da das Werkzeug 12 nicht nur an den dünnen Kanten der Schieber 6 eingreift. Andererseits ist gewährleistet, dass das Werkzeug 12 nicht am Sockel 2 ungewollt streift und dadurch zusätzlich Reibung entsteht.

Die hier beschriebenen Brackets 1 können zudem sehr flach ausgestaltet sein und zeichnen sich erfindungsgemäss durch eine Gesamthöhe h von höchstens 2, insbesondere höchstens 1.7 mm aus. Die Belastung für den Patienten ist demnach sehr gering, beim Sprechen oder Essen werden diese Brackets 1 kaum wahrgenommen.

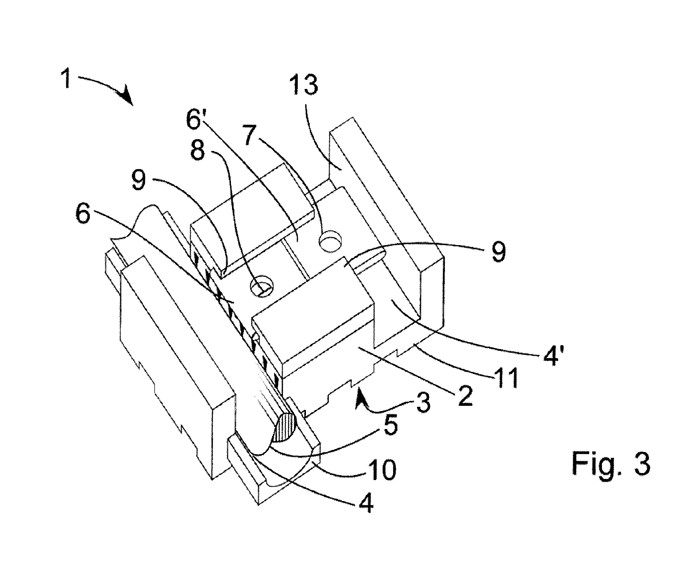

In einer bevorzugten Ausgestaltung, dargestellt in Fig. 3, umfasst das Bracket 1 noch eine zweite Rille 4' zum Einlegen eines weiteren Drahtes 5 und einen zweiten Schieber 6' zum Verschliessen der zweiten Rille 4'. Durch Anbringung von zwei Drähten 5 lässt sich die Behandlung zur Korrektur der Zahnstellung viel präziser durchführen. Dabei kann beispielsweise mindestens eine der Rillen 4, 4' eine rechtwinklige Querschnittsform aufweisen zum Aufnehmen eines rechteckigen Drahtes 5. Mit diesem kann eine Torsionskraft auf den Zahn bewirkt werden.

Erfindungsgemäss ist der zweite Schieber 6' ebenso als Platte ausgestaltet, planar verschiebbar und am Sockel 2 resp. unter den Führungen 9 geklemmt angebracht wie der erste Schieber 6.

Vorzugsweise weist jeder Schieber 6, 6' eine Aussparung 7 auf zum Eingreifen eines Werkzeuges 12 zum Öffnen und zum Schliessen des Schiebers 6, 6'.

In Fig. 2b ist das erfindungsgemässe Bracket 1 nach Fig. 3 im Schnitt quer zur Rille 4 dargestellt mit zwei integrierten Schiebern 6, 6'. Die Schieber 6, 6' sollten mindestens 1.5 mal länger ausgestaltet sein wie die Breiten der Rillen 4, 4', damit auch im geschlossenen Zus3tand noch ein genügender Anteil der Schieber 6, 6' in den Führungen 9 verbleiben und in dieser Stellung ausharren.

Es ist zu beachten, dass in einer bevorzugten Ausführungsform die Fläche eines Schiebers 6, 6' etwa 1.2 x 1.2 mm, +/- 0.3mm bei einer Dicke zwischen 0.2 und 0.4mm beträgt. Die Rillenbreite ist etwa 0.5-0.6mm breit und bietet Platz für einen Draht mit einem Durchmesser von etwa 0.4mm. Obwohl die Dimensionen sehr klein sind, halten die erfindungsgemässen Ausführungen mit geschlossenen Schiebern 6 eine Zugkraft von 10N an den Drähten 5 aus, ohne beschädigt zu werden.

Nachdem ein Satz von Brackets 1 an den Zähnen angebracht ist, legt der Zahnarzt einen Draht 5 durch alle Rillen 4 und gegebenenfalls einen weiteren Draht 5 durch die Rillen 4' der einzelnen Brackets 1. Durch Schliessen der Schieber 6, 6' werden der oder die Drähte 5 schliesslich in ihren Positionen festgehalten. Die Drähte 5 sind unter den Schiebern 6, 6' nur eingesperrt, nicht eingeklemmt.

Zum Schliessen greift der Zahnarzt mit einem Werkzeug 12 in die Aussparung 7 jedes Schiebers 6, 6' und verschliesst so alle Schieber 6, 6'. Zum Verschieben der Schieber 6, 6' muss jeweils eine Haftreibung von etwa 0.5-1N überwunden werden.

In einer weiteren erfindungsgemässen Ausgestaltung weisen die Brackets 1 Ohren 10 auf als Stützen für weitere Befestigungen.

Vorzugsweise sind die Schieber 6, 6' koplanar angeordnet. Dies erleichtert die Konstruktion des Brackets 1, da dadurch beide Schieber 6, 6' in denselben Führungen 9 gehalten werden können. Diese Führungen 9 sind vorzugsweise am Sockel 2 angebracht, insbesondere angeklipst, angeschweisst oder angeklebt. Sie können auch einstückig mit dem Sockel 2 verbunden sein. Wenn nur eine der Führungen 9 einstückig angebracht ist oder wenn einer der stirnseitigen Bereiche der Führungen 9 frei zugänglich ist, lassen sich die Schieber 6, 6' einfacher montieren. Die Schieber 6, 6' lassen sich nicht mehr montieren, wenn beide Führungen 9 am Sockel 2 angebracht sind, wegen der erhöhten Wand 13 in der Verlängerung der Führungen 9, die näher ist als die Schieber 6 lang sind in Verschiebungsrichtung. Dies erzwingt zwar ein nachträgliches Anbringen der Führungen, garantiert aber andererseits, dass die Schieber 6 niemals verloren gehen resp. aus den Führungen fallen können.

Der Sockel 2 und/oder die Führungen 9 bestehen vorzugsweise aus Kunststoff. Metallische Ausführungen sind auch gut möglich. Die Schieber 6, 6' bestehen vorzugsweise entweder aus Metall, insbesondere aus rostfreiem Federstahl, oder aus Kunststoff. Diese Kunststoff/Metall Kombination der Materialien hat sich als kostengünstig und technisch sinnvoll erwiesen. Bei Vorrichtungen, die vollständig aus Kunststoff bestehen, ist ein Abrieb von nickelhaltigem Metall vollständig ausgeschlossen, was insbesondere für Allergiker von grossem Vorteil ist. Daher sind auch solche Ausführungen bevorzugt anzuwenden. Zudem sind Produktionskosten wesentlich günstiger und es hat sich erwiesen, dass die Kunststoffkomponenten eine wesentlich geringere Fehlerquote aufweisen als die Metallkomponenten, die schneller brechen. Abgesehen von Garantieansprüchen der Patienten sind auch die Umtriebe für den Ersatz eines Bracket-Elements erheblich. In der Praxis haben sich Metallbrackets allerdings sehr gut durchgesetzt. Da Kunststoff bisher noch weniger erprobt ist, sind viele Zahnärzte skeptisch dazu eingestellt.

Ein besonderer Vorteil dieser Brackets 1 ist, dass die Oberfläche flach ausgestaltet ist ohne kantige Ecken. Andere Brackets nach dem Stand der Technik weisen grosse Bügel auf und sind an der Oberfläche eher spitzig als flach ausgestaltet, was für den Patienten als unangenehm empfunden wird.

Die untere Fläche 3 des Brackets 1 ist in den abgebildeten Figuren nur am Rand sichtbar. Sie weist vorzugsweise eine Struktur auf, welche aus einer Vielzahl von sich nicht berührenden Zapfen 11 besteht. Im Gegensatz dazu sind herkömmliche Brackets mit Gittermustern strukturiert, die Höhlen bilden. Diese Zapfenstruktur verhindert, dass sich beim Auftragen eines Klebstoffs Luftblasen bilden, welche beim Andrücken des Brackets an einen Zahn in der Struktur gefangen sind und nicht entweichen können, wodurch nicht haftende Regionen entstehen.

### Bezugszeichenliste

- 1: Bracket
- 2: Sockel
- 3: Fläche
- 4: Rille
- 5: Draht
- 6: Schieber
- 7: Aussparung
- 8: Sicke
- 9: Führung
- 10: Ohren
- 11: Zapfen
- 12: Werkzeug
- 13: Wand
- h: Höhe des Brackets

## Patentansprüche

1. Nicht-ligierendes Bracket für die Orthodontie umfassend einen Sockel (2) mit einer Fläche (3) zum Anbringen an einen Zahn, einer ersten Rille (4) zum Einlegen eines ersten Drahtes (5) und zwei quer zur Rille (4) verlaufende Führungen (9), sowie einen als Platte ausgestalteten ersten Schieber (6), welcher in den Führungen (9) linear verschiebbar geführt ist zum Verschliessen und zum Öffnen der ersten Rille (4), **dadurch gekennzeichnet, dass** der Schieber (6) in den Führungen (9) geklemmt und unentnehmbar angebracht ist und in der geschlossenen Stellung am Sockel (2) frontal ansteht.

2. Bracket nach Anspruch 1, **dadurch gekennzeichnet, dass** der Schieber (6) auch in der offenen Stellung am Sockel (2) an einem Anschlag ansteht.

3. Bracket nach Anspruch 1 oder 2, **dadurch gekennzeichnet, dass** das Bracket eine zweite Rille (4') zum Einlegen eines zweiten Drahtes sowie einen als Platte ausgestalteten zweiten Schieber (6') umfasst, welcher in den Führungen (9) linear verschiebbar geführt ist zum Verschliessen und zum Öffnen der zweiten Rille (4'), wobei der zweite Schieber (6') in den Führungen (9) geklemmt ist und in der geschlossenen Stellung am Sockel (2) frontal ansteht.

4. Bracket nach Anspruch 3, **dadurch gekennzeichnet, dass** beide Schieber (6, 6') koplanar angeordnet sind.

5. Bracket nach einem der vorhergehenden Ansprüche, **dadurch gekennzeichnet, dass** jeder Schieber (6, 6') eine Oberflächenrauhigkeit aufweist, welcher die Klemmung an den Führungen (9) gewährleistet.

6. Bracket nach Anspruch 1 oder 2, **dadurch gekennzeichnet, dass** jeder Schieber (6, 6') eine Aussparung (7) aufweist zum Eingreifen eines Werkzeuges (12) zum Öffnen und zum Schliessen des Schiebers (6, 6').

7. Bracket nach Anspruch 6, **dadurch gekennzeichnet, dass** der Sockel (2) entlang der Verschiebung jedes Schiebers (6, 6') im Bereich seiner Aussparung (7) eine Sicke (8) aufweist zum Eingreifen und Fahren eines Werkzeuges (12) beim Öffnen und beim Schliessen jedes Schiebers (6, 6').

8. Bracket nach einem der vorhergehenden Ansprüche, **dadurch gekennzeichnet, dass** eine der Rillen (4, 4') eine rechtwinklige Querschnittsform aufweist zum Aufnehmen eines rechteckigen Drahtes (5).

9. Bracket nach einem der vorhergehenden Ansprüche, **dadurch gekennzeichnet, dass** mindestens eine der Führungen (9) am Sockel (2) angebracht, insbesondere angeclipst, angeschweisst oder angeklebt ist.

10. Bracket nach einem der vorhergehenden Ansprüche, **dadurch gekennzeichnet, dass** der Sockel (2) und/oder die Führungen (9) aus Kunststoff bestehen.

11. Bracket nach einem der vorhergehenden Ansprüche, **dadurch gekennzeichnet, dass** jeder Schieber (6, 6') aus Metall, insbesondere aus rostfreiem Federstahl, oder aus Kunststoff besteht.

12. Bracket nach einem der vorhergehenden Ansprüche, **dadurch gekennzeichnet, dass** die Fläche (3) zum Anbringen an einen Zahn eine Struktur aufweist, welche aus einer Vielzahl von Zapfen (11) besteht.

13. Bracket nach einem der vorhergehenden Ansprüche, **gekennzeichnet durch** eine Gesamthöhe h von höchstens 2, insbesondere höchstens 1.7 mm.

14. Bracket nach einem der vorhergehenden Ansprüche, **dadurch gekennzeichnet, dass** die Oberfläche flach und mit abgerundeten Kante ausgestaltet ist.

15. Bracket nach einem der vorhergehenden Ansprüche, **gekennzeichnet durch** Ohren (10) als Stützen für weitere Befestigungen.
